# FASCICULE DE BREVET EUROPEEN

(11) **EP 2 544 797 B1**
(45) Date de publication et mention de la délivrance du brevet: **02.05.2018**
(21) Numéro de dépôt: 11712611.0
(22) Date de dépôt: 21.02.2011
(51) Int. Cl.: B01D 53/94, F01N 3/20, C01C 1/00

(54) **DISPOSITIF DE STOCKAGE D'UN REDUCTEUR GAZEUX POUR LA REDUCTION CATALYTIQUE SELECTIVE D'OXYDES D'AZOTES**
VORRICHTUNG ZUR LAGERUNG EINES GASREDUKTIONSMITTELS FÜR DIE SELEKTIVE KATALYTISCHE REDUKTION VON STICKSTOFFOXIDEN
DEVICE FOR STORING A GAS REDUCING AGENT FOR THE SELECTIVE CATALYTIC REDUCTION OF NITROGEN OXIDES

(30) Priorité: 12.03.2010 FR 1051773
(43) Date de publication de la demande: 16.01.2013
(73) Titulaire: PSA Automobiles SA, 78300 Poissy (FR)
(72) Inventeur: CHEVALIER, Philippe, F-92500 Rueil-Malmaison (FR); CHARIAL, Christophe, F-78000 Versailles (FR)
(74) Mandataire: Laurin, Ghislain Nicolas
(86) Numéro de dépôt international: PCT/FR2011/050355
(87) Numéro de publication internationale: WO 2011/110764

(56) Documents cités:
- WO-A2-2006/081824
- DE-A1- 10 218 355
- DE-A1-102006 061 370
- US-A1- 2005 274 108
- US-A1- 2009 280 047

## Description

L'invention porte sur le domaine de la dépollution des gaz d'échappement d'un moteur à combustion. Plus précisément, elle porte sur la réduction des oxydes d'azote contenus dans les gaz d'échappement d'un moteur à combustion, par réduction catalytique sélective (ou SCR, selon l'acronyme anglophone pour « selective catalytic reduction »)

La technologie de réduction des oxydes d'azote par réduction catalytique sélective consiste à réduire les oxydes d'azote avant leur sortie du circuit d'échappement d'un moteur à combustion, à l'aide d'un agent réducteur (ou d'un précurseur d'agent réducteur) introduit dans la ligne d'échappement.

Dans la suite du présent document, on emploiera indifféremment le terme de réducteur pour désigner l'agent réducteur ou un précurseur de l'agent réducteur.

Il est par ailleurs connu de stocker l'agent réducteur, par exemple de l'ammoniac gazeux, dans un matériau solide capable de l'adsorber ou de l'absorber. A titre d'exemple, le document PCT WO2006081824 divulgue une substance apte à assurer un tel stockage sous forme « solide ».

Le réducteur peut être stocké dans une poudre compacte solide placée dans une cartouche adéquate.

Afin de relâcher le réducteur, il est nécessaire de placer le matériau de stockage dans des conditions de température et de pression favorables. Typiquement, il est nécessaire de le chauffer. Un stockage de taille importante est difficile à chauffer efficacement, et, en outre, les phases de démarrage à froid d'un moteur à combustion sont très pénalisantes du point de vue des émissions polluantes. Il est ainsi nécessaire de traiter de manière efficace aussi rapidement que possible, et donc de pouvoir élever rapidement la température du matériau de stockage.

La demande de brevet DE102006061370 présente un dispositif pour le traitement par catalyse SCR des oxydes d'azotes, dans lequel l'agent réducteur (ammoniac) est stocké sous une forme « solide » c'est-à-dire un dans un matériaux capable de l'adsorber ou de l'absorber, dans deux réservoirs : un grand réservoir destiné à assurer l'autonomie souhaitée entre deux entretiens du véhicule ainsi équipé, et un petit réservoir tampon chauffé électriquement et rempli par le grand réservoir, permettant d'assurer un meilleur contrôle de la quantité d'agent réducteur relâché, ainsi qu'un chauffage rapide du petit réservoir.

Cependant, cette solution est relativement complexe à plus d'un titre. D'une part, il est nécessaire d'assurer périodiquement, ou en continu, le remplissage du petit réservoir par le grand réservoir, ce qui nécessite un circuit complexe pour faire transiter le réducteur. En outre, le pilotage d'un tel circuit, tant pour la circulation des fluides que pour le contrôle des fonctions de chauffage, de purge, etc. est très complexe à mettre en oeuvre. Enfin, une telle solution entraine une grande complexité industrielle et logistique, du fait de la variété des éléments mis en oeuvre. Il est par ailleurs connu du document US-A-0274108 un dispositif pour amener de l'ammoniac à un organe SCR à partir de d'un réservoir de carbamate d'ammonium associé à une installation de chauffage pour décomposer le carbamate et libérer de l'ammoniac. Il est également connu du document DE 102 18355 une installation de post-traitement de gaz d'échappement, comprenant un réservoir de stockage d'agent réducteur qui est configuré comme un composant modulaire amovible. Il est enfin connu du document US 2009 0280047 un matériau de stockage solide d'ammoniac consistant en un sel de complexe métal-amine sous forme pulvérulente et apte à libérer et absorber à nouveau de l'ammoniac.

Dans l'invention, on résout ces problèmes par l'adoption d'un dispositif de stockage rationnalisé, permettant de répondre à des contraintes spécifiques industrielles, de sureté de fonctionnement, de packaging et de coût.

Plus précisément, l'invention porte sur un dispositif de stockage d'un réducteur gazeux pour la réduction catalytique sélective des oxydes d'azotes, comportant au moins deux cartouches contenant un matériau de stockage du réducteur par adsorption ou absorption identique dans chaque cartouche, caractérisé en ce que toutes les cartouches présentent un volume de stockage de réducteur identique. Il n'est ainsi pas nécessaire d'assurer le transfert de réducteur entre les cartouches lors des phases d'utilisation du système SCR.. Un tel dispositif permet de ne pas utiliser de cartouche de petit volume
(cartouche dite « start-up ») tel que décrit dans l'art antérieur. Des cartouches de volumes identiques permettent, en alimentant à tour de rôle le système de catalyse SCR, une simplification de l'architecture hydraulique et électrique (pour le chauffage) du système de stockage.

Dans une variante de l'invention, le dispositif de stockage comporte un dispositif d'alimentation permettant de soutirer le réducteur d'une seule cartouche à la fois. Le procédé permet ainsi d'alimenter le système SCR par une cartouche à la fois, à tour de rôle.

De préférence, les cartouches sont identiques. Cela permet une simplification logistique importante, tant pour ce qui concerne les cartouches en elle-même que pour les périphériques avec lesquels elles sont en interface, ce qui simplifie la mise en ouvre industrielle de l'invention.

Dans une variante de l'invention, les cartouches sont au nombre de deux. Deux cartouches identiques permettent en effet généralement d'assurer, dans le cadre d'une application automobile, un intervalle de maintenance suffisant, sans entrainer un volume de cartouche unitairement trop important qui serait défavorable à une désorption rapide du réducteur dans la cartouche.

De préférence, le matériau de stockage est un solide ou un solide pulvérisé.

De préférence, le matériau de stockage est un sel choisi parmi : CaCl₂, SrCl₂, FeCl₂, MgCl₂, NiCl₂. Ces sels permettent un stockage efficace et une désorption aisée du NH₃. SrCl₂ est le sel préférentiellement utilisé dans l'invention.

Selon l'invention, chaque cartouche présente des moyens de chauffage électriques pouvant être alimentés indépendamment de sorte à chauffer une seule cartouche à la fois. Ceci permet la désorption du réducteur dans une cartouche à la fois. On peut ainsi alimenter le système de catalyse SCR par une seule cartouche à la fois, tout en limitant les pertes énergétiques car seule la cartouche employée pour alimenter le système est chauffée.

Dans une variante de l'invention, les moyens de chauffage comportent un élément interne par cartouche. C'est une solution permettant un chauffage efficace du matériau de stockage, au prix d'une certaine complexité de la cartouche et d'un certain surcoût au niveau de la cartouche en elle-même.

Selon l'invention, les moyens de chauffage comportent une nappe chauffante positionnée en surface d'au moins une cartouche, et présentant au moins un élément résistif. C'est un moyen simple de chauffer les cartouches. Il limite en outre le coût unitaire d'une cartouche (qui n'est pas en elle-même dotée d'un moyen de chauffage).

De préférence, la nappe comporte un substrat souple à base de silicone. La silicone est souple et résistante à la chaleur, ce qui permet l'obtention d'une nappe de chauffage résistante et pouvant épouser au mieux le contour des cartouches (ce qui en augmente l'efficacité de chauffage).

Selon l'invention, le dispositif comporte une nappe unique positionnée en surface de plusieurs cartouches et présentant plusieurs moyens de chauffage, de sorte à permettre le chauffage de chaque cartouche indépendamment des autres, lors de l'alimentation d'un ou plusieurs éléments résistifs. Une nappe unique est moins coûteuse, et plus facile à mettre en oeuvre.

De préférence, le dispositif présente un connecteur électrique de masse commun aux moyens de chauffage. Cela permet de réduire les coûts de la connectique associée au chauffage.

De préférence, le dispositif comporte en outre une structure de fixation des cartouches et des moyens de fixation rapide de chaque cartouche à ladite structure, de sorte à permette un échange rapide de chaque cartouche indépendamment les unes des autres. On peut ainsi, lors d'une maintenance du système, remplacer aisément une cartouche vide ou partiellement vide de réducteur par une cartouche pleine.

L'invention porte également sur un procédé d'alimentation en réducteur d'un système de réduction catalytique sélective des oxydes d'azote d'un moteur à combustion, mettant en jeu un dispositif de stockage selon l'invention, caractérisé en ce qu'on alimente le système par une première cartouche déterminée jusqu'à ce quelle soit vide de réducteur, puis par une seconde cartouche jusqu'à ce qu'elle soit vide de réducteur, et ainsi de suite. Ce procédé d'alimentation, rendu possible par la mise en jeu d'un dispositif selon l'invention, est simple.

L'invention est décrite plus en détail ci-après et en référence aux figures représentant schématiquement le système dans son mode de réalisation préférentiel.
La figure 1 présente l'architecture générale d'un dispositif de stockage dans une variante de l'invention.
La figure 2 présente schématiquement un premier mode de réalisation de moyens de chauffage mis en oeuvre dans une variante de l'invention.
La figure 3 présente schématiquement un second mode de réalisation de moyens de chauffage mis en oeuvre dans une variante de l'invention.

Dans le cadre de l'invention, on utilise pour stocker la quantité de réducteur souhaitée de réducteur au moins 2 cartouches de stockage de réducteur d'oxyde d'azote. Ces cartouches présentent toutes un volume de stockage identique. On considérera cependant une certaine marge de tolérance dans l'égalité des volumes des cartouches. Cette tolérance est liée aux tolérances de réalisation de la cartouche, notamment dans le cas ou les cartouches ne sont pas toutes géométriquement strictement identiques (par exemple pour optimiser leur implantation). Le solide (ou solide pulvérisé) employé dans chacune des cartouches est de même nature chimique.

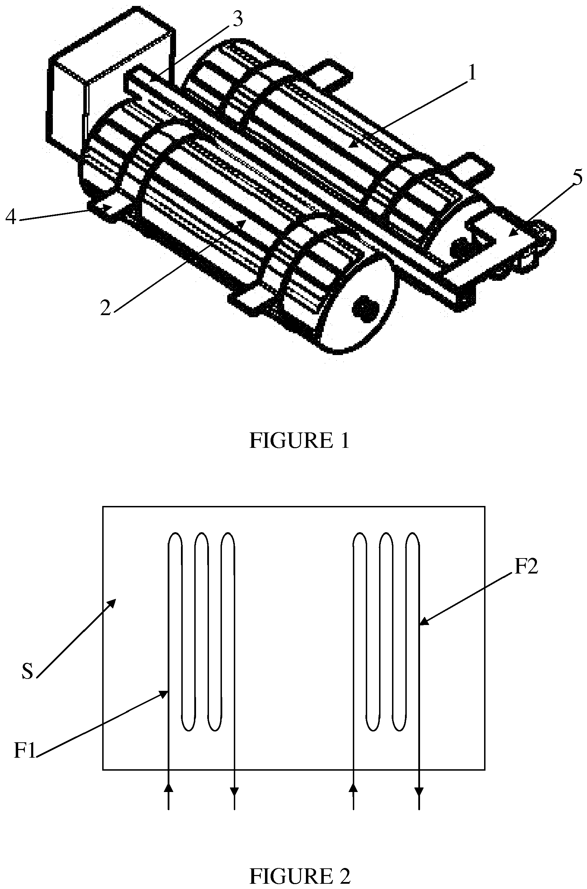

Dans la variante de l'invention représentée en figure 1, on utilise 2 cartouches identiques, tant dans leur volume de stockage que dans leur constitution. Cela permet une réduction des coûts de production et des coûts logistiques associés. Une première cartouche 1 et une seconde cartouche 2 sont montés sur un support 3 adapté, à l'aide de moyens de retenue, permettant préférentiellement un échange aisé de chaque cartouche, indépendamment les unes des autres. Dans la variante de l'invention ici représentée, les moyens de retenue comportent des moyens de fixation rapide 4 sous la forme de colliers de serrage adaptés à la géométrie extérieure des cartouches, et liés rigidement à un élément de structure 31 du support 3. D'autres modes de fixation rapide bien connus par ailleurs peuvent être employés, par exemple et de manière non exhaustive : clips, sangles, colliers élastiques, fixation magnétique, pince de maintien, crochet, mousqueton.

Les cartouches présentent dans cette variante de l'invention une forme sensiblement cylindrique fermée par deux demi-coquilles, qui est adaptée au stockage sous pression du réducteur. Il est proposé des formes cylindriques afin de favoriser la tenue à la pression cyclée et pour faciliter le processus de remplissage des cartouches. Le réducteur, à savoir l'agent réducteur de réduction catalytique sélective des oxydes d'azote ou un précurseur d'un tel réducteur, peut conformément à l'art antérieur connu être stocké sous forme gazeuse dans une poudre compacte solide (ou tout autre corps/état de la matière permettant de le réaliser) et être relâché sous l'effet d'un chauffage adéquat.

Par ailleurs la forme cylindrique permet, dans une variante de l'invention munie de moyens de chauffage électriques, de minimiser l'apport électrique extérieur pour apporter la puissance thermique nécessaire à la désorption du réducteur gazeux. Les demi-coquilles fermant le cylindre peuvent présenter diverses formes, par exemple une forme de demi-sphère, ou coniques, ou encore présenter une surface plane reliée au cylindre par un rayon de courbure ou un chanfrein.

Dans certaines variantes de l'invention, non ici représentées, les cartouches peuvent présenter des géométries sensiblement différentes les unes par rapport aux autres, notamment pour répondre à des contraintes d'implantation dans un véhicule automobile, mais présentent néanmoins des volumes sensiblement identiques.

Les cartouches sont dimensionnées de sorte que le volume de réducteur stockable par l'ensemble des cartouches permette une autonomie suffisante pour assurer le fonctionnement du système de catalyse SCR entre deux maintenances programmées du moteur équipé d'un tel dispositif. Par ailleurs, dans le cadre d'un réchauffage par des moyens électriques de chauffage des cartouches, les cartouches sont dimensionnées de sorte à être suffisamment petites pour présenter une inertie thermique assez faible pour que les moyens de chauffage permettent une désorption rapide du réducteur consécutivement à un démarrage à froid du moteur à combustion équipé.

Typiquement, pour une application automobile, on peut estimer qu'il faut que la désorption débute au plus 200 secondes environ après un démarrage à froid à 20 °C. Pour arriver à ce résultat, en fonction de la puissance des moyens de chauffage employés, l'inventeur a constaté que des cartouches sensiblement cylindriques présentant un diamètre compris entre 80mm et 250mm et une longueur de 100mm à 800mm, pour un volume interne compris entre 1 et 5 litres peuvent représenter un bon compromis.

Dans un dispositif conforme à l'invention, le nombre optimum de cartouche à employer en termes de coût de fabrication et de sûreté de fonctionnement, indépendamment des problématiques d'implantation, est donc le nombre minimum (car employer le moins de cartouche possible simplifie le dispositif et en réduit le coût global) permettant d'assurer l'autonomie requise entre deux maintenance, tout en présentant des cartouches suffisamment petites pour offrir une inertie thermique assez faible pour permettre une désorption rapide du réducteur.

Cependant, on peut privilégier un autre paramètre et augmenter le nombre de cartouche en en réduisant la taille unitaire, de sorte à limiter la consommation d'énergie électrique employée pour relâcher le réducteur.

Il n'est pas ici détaillé de système de régulation du débit de réducteur gazeux. Un tel système de régulation peut être disposé dans la zone libre 5. Il pourra avantageusement être constitué d'un col sonique, d'une électrovanne et de capteurs permettant d'assurer le bon débit de réducteur vers l'échappement.

Le dispositif pourra avantageusement disposer de moyens d'isolation thermique pour limiter la dissipation vers l'extérieur, et ainsi optimiser le temps de chauffage et limiter les pertes thermiques pour minimiser la consommation électrique à puissance thermique égale transférée au stockage gazeux.

Dans la variante présentée en figure 1, le dispositif comporte deux cartouches identiques en forme, en densité de NH3 à neuf par litre de sel (le matériau de stockage pouvant être un sel choisi parmi CaCl₂, SrCl₂, FeCl₂, MgCl₂, NiCl₂ et en isolation. Elles assurent chacune la moitié de l'autonomie requise (dans la variante ici représentée comportant 2 cartouches) pour le système de catalyse SCR : elles sont chauffées à tour de rôle pour assurer finalement l'intervalle de maintenance souhaité. Dans une variante de l'invention (non représentée) présentant n cartouches, chaque cartouche assurera une autonomie de 1/n de l'intervalle de maintenance souhaité.

Les moyens électriques employés pour chauffer les cartouches peuvent différer selon la variante de l'invention considérée. Cependant, dans l'invention, il est important de pouvoir assurer indépendamment le chauffage de chacune des cartouches, afin de pouvoir provoquer la désorption du réducteur d'abord dans une cartouche, puis dans une autre et ainsi de suite.

Dans une variante de l'invention, les moyens de chauffage peuvent être principalement constitués de résistances internes aux cartouches.

Selon l'invention, les moyens de chauffage peuvent être disposés sur une nappe recouvrant au moins en partie la surface d'au moins une cartouche. On désigne par nappe tout élément qui épouse en partie la forme extérieure d'une ou plusieurs cartouche. En particulier, une nappe peut être rigide, ou au contraire comporter un substrat souple qui épouse la forme extérieure des cartouches une fois la nappe positionnée. Une nappe comportant un substrat en silicone est particulièrement bien adaptée à la mise en oeuvre de l'invention, la silicone offrant de bonnes propriétés de souplesse et de résistance à la température.

Bien évidemment, lorsque le chauffage des cartouches est réalisé par une nappe externe, la constitution des cartouches doit permettre la transmission de la chaleur vers le matériau de stockage contenu dans la cartouche. Pour cela, la cartouche comportera par exemple une paroi externe en acier.

La figure 2 présente schématiquement une variante de ce type de nappe, adaptée pour le chauffage de deux cartouches. La nappe emploi alors deux éléments résistifs, disposés sur un substrat S de sorte à couvrir chacun une cartouche différente une fois la nappe mise en position. Lorsqu'un élément résistif est traversé par un courant électrique, ce dernier est converti en énergie thermique transférée ensuite par conduction au sel/poudre contenu dans la cartouche avec laquelle il est en contact (ou du moins dont il est très proche). Les éléments résistifs mis en jeu dans la nappe représenté en figure 2 sont des fils résistifs, respectivement un premier fil résistif F1 et un second fil résistif F2.

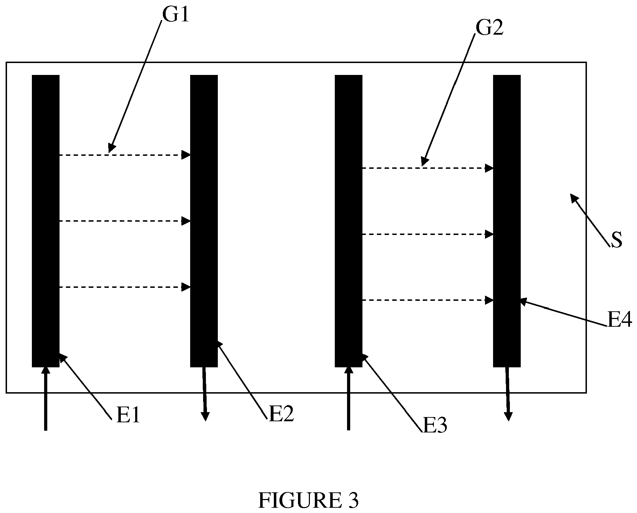

La figure 3 présente schématiquement une autre variante de nappe adaptée pour le chauffage de 2 cartouches. Par rapport à la nappe présentée en figure 2, les moyens de chauffage mis en jeu diffèrent, en ce qu'ils présentent chacun deux électrodes, entre lesquelles un élément résistif est interposé. Il peut s'agir d'un faisceau de fils résistifs, ou encore d'un revêtement appliqué sur la nappe entre les électrodes. Dans la variante ici représentée, on a donc une première électrode E1 et une seconde électrode E2 entre lesquelles est disposé un premier faisceau de fils résistifs G1, formant des premiers moyens destinés au chauffage d'une première cartouche, et une troisième électrode E3 et une quatrième électrode E4 entre lesquelles est disposé un second faisceau de fils résistifs G2, formant des seconds moyens destinés au chauffage d'une seconde cartouche.

La nappe ainsi constituée présente de préférence des connecteurs électriques (non représentés) distincts pour l'alimentation de chacun des éléments résistifs. Les connecteurs de masse électrique de chaque élément résistif pourront être distincts, ou, pour une plus grande simplicité du dispositif, être rassemblés sous la forme d'un connecteur de masse commun.

Le type de connecteur employé est préférentiellement adapté pour être facilement connectable au réseau de bord d'un véhicule automobile, éventuellement via un boîtier de contrôle électronique. En particulier, puisque dans l'invention on chauffe une seule cartouche à la fois, un boîtier relais (« relais box ») non représenté peut permettre la distribution adéquate du courant électrique pour le chauffage d'une cartouche déterminée.

Le boîtier relais peut être directement intégré à la nappe.

Selon la variante de l'invention considérée, de nombreuses technologies de chauffage sont envisageable, et il est notamment possible d'employer des résistances de type CTP (à coefficient de température positif, c'est-à-dire dont la résistance augmente dans une plage de température déterminée).

Les avantages procurés par l'invention sont nombreux. Un dispositif selon l'invention est beaucoup plus simple à mettre en oeuvre que les systèmes les plus proches connus dans l'art antérieur, en ce qu'il n'y a pas de transfert de réducteur d'une cartouche vers une autre pour l'alimentation du système SCR (seul le transfert du réducteur SCR résiduel dans les conduits d'alimentation du système SCR est possible lors de phases de purges du système au cours desquelles le réducteur résiduel est renvoyé dans les moyens de stockage).

L'emploi de cartouches présentant des volumes de stockage égaux permet une standardisation des périphériques des cartouches (moyens de chauffage, etc.). Une variante de l'invention employant des cartouches parfaitement identiques apporte un grand avantage dans l'industrialisation de la solution, car elle augmente encore d'avantage la standardisation des pièces, tant au niveau des cartouches elles mêmes que dans éléments connexes (moyens de retenue, etc.).

## Revendications

1. Dispositif de stockage d'un réducteur gazeux pour la réduction catalytique sélective des oxydes d'azotes, comportant au moins deux cartouches (1,2) contenant un matériau de stockage du réducteur par adsorption ou absorption identique dans chaque cartouche (1,2) toutes les cartouches (1,2) présentant un volume de stockage de réducteur identique, chaque cartouche (1,2) présentant des moyens de chauffage électriques pouvant être alimentés indépendamment de sorte à chauffer une seule cartouche à la fois **caractérisé en ce que** les moyens de chauffage comportent une nappe unique positionnée en surface de plusieurs cartouches et présentant plusieurs éléments résistifs, de sorte à permettre le chauffage de chaque cartouche indépendamment des autres, lors de l'alimentation d'un ou plusieurs desdits éléments résistifs (F1, F2, G1, G2).

2. Dispositif selon la revendication 1, **caractérisé en ce qu'**il comporte un dispositif d'alimentation permettant de soutirer le réducteur d'une seule cartouche à la fois.

3. Dispositif selon la revendication 1 ou la revendication 2, **caractérisé en ce que** les cartouches (1,2) sont identiques.

4. Dispositif selon l'une quelconque des revendications précédentes, **caractérisé en ce que** les cartouches (1,2) sont au nombre de deux.

5. Dispositif selon l'une quelconque des revendications précédentes, **caractérisé en ce que** le matériau de stockage est un solide ou un solide pulvérisé.

6. Dispositif selon la revendication 5, **caractérisé en ce que** le matériau de stockage est un sel choisi parmi : CaCl₂, SrCl₂, FeCl₂, MgCl₂, NiCl₂.

7. Dispositif selon l'une quelconque des revendications 1 à 6, **caractérisé en ce que** les moyens de chauffage comportent un élément résistif (F1, F2, G1, G2) interne par cartouche.

8. Dispositif selon l'une des revendications précédentes, **caractérisé en ce que** la nappe comporte un substrat (S) souple à base de silicone.

9. Dispositif selon l'une quelconque des revendications précédentes, **caractérisé par** un connecteur électrique de masse commun aux moyens de chauffage.

10. Ensemble comportant un dispositif selon l'une quelconque des revendications précédentes, **caractérisé en ce qu'**il comporte en outre une structure (3) de fixation des cartouches (1,2) et des moyens de fixation rapide (4) de chaque cartouche (1,2) à ladite structure (3), de sorte à permette un échange rapide de chaque cartouche (1,2) indépendamment les unes des autres.

11. Procédé d'alimentation en réducteur d'un système de réduction catalytique sélective des oxydes d'azote d'un moteur à combustion, mettant en jeu un dispositif de stockage selon l'une quelconque des revendications 1 à 9, et où on alimente le système par une première cartouche (1) déterminée jusqu'à ce qu'elle soit vide de réducteur, puis par une seconde (2) cartouche jusqu'à ce qu'elle soit vide de réducteur, et ainsi de suite.

## Patentansprüche

1. Vorrichtung zur Lagerung eines gasförmigen Reduktionsmittels für die selektive katalytische Reduktion von Stickstoffoxiden, die mindestens zwei Patronen (1, 2) umfasst, die ein Lagermaterial des Reduktionsmittels durch Adsorption oder Absorption identisch in jeder Patrone (1, 2) enthalten, wobei alle Patronen (1, 2) ein identisches Reduktionsmittellagervolumen aufweisen, wobei jede Patrone (1, 2) elektrische Heizmittel aufweist, die unabhängig derart versorgt werden können, dass eine Patrone auf einmal erhitzt wird, **dadurch gekennzeichnet, dass** die Heizmittel eine einzige Lage umfassen, die an der Oberfläche mehrerer Patronen positioniert ist und mehrere Widerstandselemente aufweist, so dass das Heizen jeder Patrone bei der Versorgung eines oder mehrerer Widerstandselemente (F1, F2, G1, G2) unabhängig von den anderen erlaubt wird.

2. Vorrichtung nach Anspruch 1, **dadurch gekennzeichnet, dass** sie eine Versorgungsvorrichtung umfasst, die es erlaubt, das Reduktionsmittel einer einzigen Patrone auf einmal abzuzapfen.

3. Vorrichtung nach Anspruch 1 oder Anspruch 2, **dadurch gekennzeichnet, dass** die Patronen (1, 2) identisch sind.

4. Vorrichtung nach einem der vorhergehenden Ansprüche, **dadurch gekennzeichnet, dass** es zwei Patronen (1, 2) gibt.

5. Vorrichtung nach einem der vorhergehenden Ansprüche, **dadurch gekennzeichnet, dass** das Lagermaterial ein Feststoff oder ein pulverisierter Feststoff ist.

6. Vorrichtung nach Anspruch 5, **dadurch gekennzeichnet, dass** das Lagermaterial ein Salz ist, das aus folgenden ausgewählt ist: CaCl₂, SrCl₂, FeCl₂, MgCl₂, NiCl₂.

7. Vorrichtung nach einem der Ansprüche 1 bis 6, **dadurch gekennzeichnet, dass** die Heizmittel ein internes Widerstandselement (F1, F2, G1, G2) pro Patrone aufweisen.

8. Vorrichtung nach einem der vorhergehenden Ansprüche, **dadurch gekennzeichnet, dass** die Lage ein geschmeidiges Substrat (S) auf Silikonbasis umfasst.

9. Vorrichtung nach einem der vorhergehenden Ansprüche, **gekennzeichnet durch** einen elektrischen Massesteckverbinder, der den Heizmitteln gemeinsam ist.

10. Baugruppe, die eine Vorrichtung nach einem der vorhergehenden Ansprüche umfasst, **dadurch gekennzeichnet, dass** sie außerdem eine Struktur (3) zum Befestigen der Patronen (1, 2) und Mittel zum schnellen Befestigen (4) jeder Patrone (1, 2) an der Struktur (3) umfasst, so dass ein schnelles Austauschen jeder Patrone (1, 2) unabhängig voneinander erlaubt ist.

11. Verfahren zum Versorgen mit Reduktionsmittel eines Systems zur selektiven katalytischen Reduktion der Stickstoffoxide eines Verbrennungsmotors, das eine Lagervorrichtung nach einem der Ansprüche 1 bis 9 einsetzt, und wobei man das System durch eine bestimmte erste Patrone (1) versorgt, bis sie kein Reduktionsmittel mehr enthält, dann durch eine zweite Patrone (2), bis sie kein Reduktionsmittel mehr enthält, und so weiter.

## Claims

1. A device for storing a gas reducing agent for the selective catalytic reduction of nitrogen oxides, comprising at least two cartridges (1, 2) containing a material for storing the reducing agent via adsorption or absorption, which is identical in each cartridge (1, 2), all the cartridges (1, 2) having an identical reducing agent storage volume, each cartridge (1, 2) having electric heating means able to be supplied independently so as to heat a single cartridge at a time, **characterized in that** the heating means comprise a single layer positioned on the surface of a plurality of cartridges and having a plurality of resistive elements, so as to permit the heating of each cartridge independently of the others, during the supplying of one or several of said resistive elements (F1, F2, G1, G2).

2. The device according to claim 1, **characterized in that** it comprises a supply device permitting withdrawal of the reducing agent from a single cartridge at a time.

3. The device according to claim 1 or claim 2, **characterized in that** the cartridges (1, 2) are identical.

4. The device according to any one of the preceding claims, **characterized in that** the cartridges (1, 2) are two in number.

5. The device according to any one of the preceding claims, **characterized in that** the storage material is a solid or a powdered solid.

6. The device according to claim 5, **characterized in that** the storage material is a salt selected from: CaCl₂, SrCl₂, FeCl₂, MgCl₂, NiCl₂.

7. The device according to any one of claims 1 to 6, **characterized in that** the heating means comprise one internal resistive element (F1, F2, G1, G2) per cartridge.

8. The device according to one of the preceding claims, **characterized in that** the layer comprises a flexible silicone-based substrate (S).

9. The device according to any one of the preceding claims, **characterized by** an electric ground connector common to the heating means.

10. An assembly comprising a device according to any one of the preceding claims, **characterized in that** it comprises in addition a structure (3) for attachment of the cartridges (1, 2) and quick attachment means (4) of each cartridge (1, 2) to said structure (3), so as to permit a quick exchange of each cartridge (1, 2) independently of one another.

11. A method for supplying reducing agent of a system for the selective catalytic reduction of nitrogen oxides of an internal combustion engine, implementing a storage device according to any one of claims 1 to 9, and in which the system is supplied by a first specified cartridge (1) until it is empty of reducing agent, then by a second cartridge (2) until it is empty of reducing agent, and so on.
